# EUROPEAN PATENT APPLICATION

(11) **EP 1 976 319 A1**
(43) Date of publication of application: **01.10.2008**
(21) Application number: 07105159.3
(22) Date of filing: 28.03.2007
(51) Int. Cl.: H04Q 7/38, H04L 12/18

(54) **Method and apparatus for performing a seamless handover of a multicast source**

(71) Applicant: NTT DoCoMo, Inc., Tokyo (JP)
(72) Inventor: Veloso, Luis, 3400-662, Sao Giao (PT); Mendes, Paulo, 81673, Munich (DE); Curado, Marilia, 3040-668, Assafarge (PT); Monteiro, Edmundo, 3040-668, Assafarge (PT)
(74) Representative: Betten & Resch

(57) **Abstract**

A method for performing a seamless handover of a mobile node (Sender) from which a multicast session originates, said method comprising:
sending said multicast session from said mobile node (Sender) via a unicast link to a node acting as a virtual multicast root (VMR) by acting towards the receivers of said multicast session as the source of said multicast session;
buffering data received from said mobile node (Sender) by said virtual multicast root (VMR);
continuing to send the buffered data by said virtual multicast root (VMR) during a handover (2).

## Description

### FIELD OF INVENTION

The present invention relates to a method and an apparatus for performing a seamless handover of a multicast source.

### BACKGROUND OF THE INVENTION

The increasing portability of telecommunication devices combined with the development of wireless technologies makes possible the development of a wide range of ubiquitous services. Consequently, the success of such services requires users to have a seamless mobile experience. Furthermore, the simultaneously emergence of multi-user real time services has emphasised the importance of the multicast communication to deliver content to several simultaneous receivers: Multicast communication is the most appropriate technique to support multi-user real-time services, because it is more efficient than unicast in resource utilisation when the information is sent to several simultaneous receivers. Nonetheless, multicast protocols were not developed to support seamless mobility, and consequently, mobility management is necessary to provide seamless handovers involving this type of communication. This way, multicast mobility management is a challenging and unsolved task for the successful development of next generation mobile networks. Namely, a solution that constraints losses during handover of senders, and consequently, limits the service degradation perceived by users is needed.

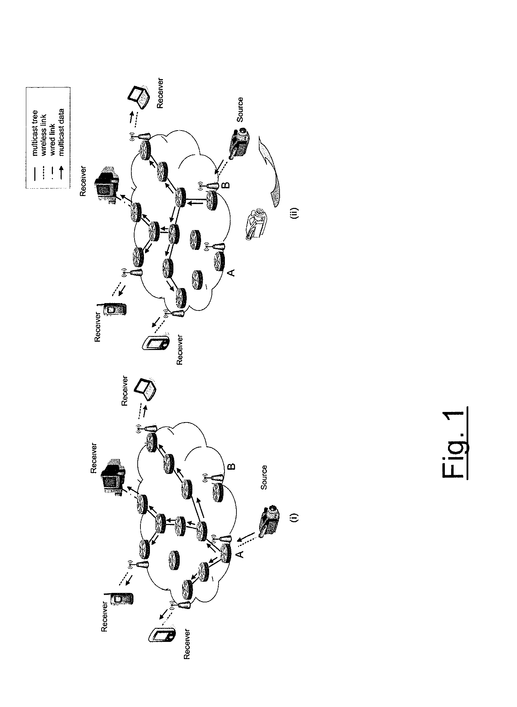

The effect of a multicast sender movement is described in Fig. 1. It shows how a source which in image (1) is at first connected to access node A moves to access node B shown in image (ii). Usually, this movement causes users to subscribe a new multicast tree, and consequently, the reconstruction of the multicast tree will lead to packet losses. The basic essence of the problem is that while the receiver movements on a multicast delivery is already complex but local, the source movement brings even more problematic issues since it is global and it may affect the complete multicast tree.

Some approaches for solving mobility problems will be described in the following.

To allow a Mobile Node to change its points of attachment to the network without losing connectivity, the IETF has proposed the Mobile IP protocol (see e.g. C. Perkings, "RFC 3344: IPv4 Mobility Support," Internet Engineering Task Force, 2002, and D. Johnson, C. Perkins, and J. Arkko, "RFC 3775: Mobility Support for IPv6," Internet Engineering Task Force, 2004). In this approach, when the Mobile Node moves to another network designated by Foreign Network (FN), it informs an entity in the Home Network (HN) denominated Home Agent (HA) about its new address denominated Care of Address (CoA). The *Home Address* (HoA) from its home network is maintained, and contrarily to the CoA does not depend on the Mobile Node location. A binding association is created in the HA between the HoA and the CoA for a given lifetime. The packets addressed to the Mobile Node are intercepted in the Home Network by the HA. To deliver these packets this entity establishes a tunnel with the Mobile Node or with an entity in the FN denominated Foreign Agent (FA).

To support multicast over Mobile IP networks, the IETF proposed two different schemes, denominated bi-directional tunnelling and remote subscription. In the first approach (also designated Home Subscription), the Mobile Node uses its CoA to tunnel the multicast data to its HA. The enclosed data contains the HoA as the source address and the multicast group address as the destination address. In the HA the data is decapsulated and forwarded to the multicast tree. This approach gives transparency to the handover of the mobile source, since a source-specific tree will be built with reference to the fixed HoA. This is, the multicast tree is rooted in the HoA, and consequently, there is no need to reconstruct the multicast tree whenever the handover of the mobile source occurs. However, this proposal introduces sub-optimal routing and a central point of failure. Moreover, the processing task of the HA increases with the number of mobile sources, wasting system resources from the HA entity.

In the remote subscription approach the multicast tree is established towards the new position of the mobile source. That is, the mobile source uses its current CoA as the source address of the multicast group. The advantage of this scheme is to provide a shortest multicast forwarding path avoiding triangle routing across the home network and avoid the utilization of tunnels when the Mobile Node moves between Access Routers (AR). However, this approach requires the reconstruction of the entire multicast tree, causing service disruption during the process of handover. Two worthy proposals for source mobility exist based on this approach: the Source Mobility support Multicast (SMM) (see e.g. K. Sato, M. Katsumoto, and T. Miki, "A New Multicast Technique Supporting Source Mobility for Future Vision Delivery Service," in International Conference on Advanced Information Networking and Application, 2004) and the Mobile SSM Source (MSSMS) (see e.g. C. Jelger and T. Noel, "Supporting Mobile SSM Sources for IPv6," presented at Globecom' 02, IEEE Global Communications Conference, Taiwan, 2002). In the SMM approach the multicast tree is constructed over a Cellular IP network (see e.g. Z. D. Shelby, D. Gatzounas, A. Campbell, and C.-Y. Wan, "Cellular IPv6," IETF Internet Draft (draft-shelby-seamoby-cellularipv6-00.txt), 2000), in which a shortest path tree (SPT) and rendezvous point tree (RPT) are combined into one multicast tree. The RPT is used to minimize the overhead in the tree reconstruction caused by source movement and the SPT is used to eliminate redundant routes for the members between the source and rendezvous points. To solve the network scalability problem that arises due to such topological constraints, this proposal considers that the network is partitioned into core and access networks. This scheme has the advantage to suppress the overhead of multicast tree reconstruction. Nonetheless, it is dependent on the Cellular IP technology requiring enhancements to be applied to other IP networks.

The MSSMS describes protocol enhancements that can be used to solve the problems introduced by mobile Source-Specific Multicast (SSM) (see e. g. S. Bhattacharyya, "RFC 3569: An Overview of Source-Specific Multicast (SSM)," Internet Engineering Task Force, 2003 and A O'Neill, "Mobility Management and IP Multicast," Internet Draft, draft-oneill-mip-multicast-01.txt, 2003) sources when used with the Mobile IPv6. In this scheme, when a mobile source moves into a new network, it informs the multicast receivers about its new CoA. Upon reception of this notification, a receiver initiates a join operation towards the new channel (nCoA, G). However, it must not initiate the pruning of the old channel before it starts receiving packets on the new channel. After handover and during the construction of the new multicast tree, the mobile source continues to send the multicast packets to the previous Access Router via a tunnel. The source only stops encapsulating the data to the old tree when it is notified by the previous Access Router that there are no receivers listening to the old channel (oCoA, G). At a point in time, two multicast trees coexist but for a given receiver, only one branch is active at a time. This way, a smooth transition is accomplished between the two multicast trees. Nevertheless, this proposal suffers from redundant routing that causes packet routing delay and network bandwidth consummation during the process of handover.

To cope with this problem of redundant routing and provide a more efficient handover from the viewpoint of routing distance and network bandwidth Takahashi et al. propose a source mobility scheme that uses a Proxy Router (PR). Different from MSSMS, it uses the address of the AR instead of the CoA as a source address of the multicast traffic, so that the new multicast tree can be established before the Mobile Node movement into the new network. A Mobile Node starts the handover procedure by sending a notification message to its ARi (current AR) just before switching its link to a new network, that includes information of the next Access Point (AP). Upon receiving this message the ARi retrieves the ARi+1 address from the local database, appends hop-by-hop option of IPv6 inside the message and forwards it to ARi+1. If the PR candidate that receives the message has (ARi,G) receivers, it subscribes the (ARi+1,G) multicast group and becomes PR. When the ARi+1 receives the notification message, it establishes the state for the multicast tree (ARi+1,G) and awaits for the arrival of the Mobile Node to its network. When the Mobile Node moves into the new network, i.e. ARi+1 and acquires CoAi+1, it starts sending multicast traffic to ARi+1. Upon receiving multicast traffic, the ARi+1 starts forwarding the multicast traffic to the (ARi+1,G) multicast group which current members are the PRs. Upon receiving this multicast traffic, the PRs swap the ARi+1 with ARi in the source address field and forward the traffic toward its interface connected to the (ARi,G) tree. This approach does not cause multicast tree reconstruction but the routing path is still not the optimal SPT from the source to all the receivers. Moreover, this scheme does not totally avoid packet losses and the interruption of the flow during the process of handover.

To overcome the disadvantages of the bi-directional and remote subscription approaches to support the mobility of a multicast source, other approaches have been suggested. A change in the multicast source address will create significant problems, requiring the address change to be communicated down the tree in advance. This is because the multicast source address must be topologically correct to pass the multicast reverse path forwarding (RPF) check. This is, if a multicast packet arrives on an incoming interface, which is also the outgoing interface that would be used to forward unicast packets to the unicast destination address, the RPF check as succeeded and the multicast packet may be replicated and forwarded. This way, changes in the multicast source will require multicast receiver application and routing signaling to be kept informed of each new source address change. An alternative way to handle the address change proposed in A. O'Neill, "Mobility Management and IP Multicast," Internet Draft, draft-oneill-mip-multicast-01.txt, 2003 is to extend the RPF mechanism and the signaling to support an arbitrary RPF point for the (S,G) in question. Every time the source address changes due to handoffs, the new RPF point for that sender is updated through the injection of a message into the multicast routing system using hop by hop multicast protocol signaling that is sent down the present tree or through broadcast to multiple neighbors (protocol specific). However, this approach introduces an expensive signaling and state refresh mechanism.

In H. Gossain, S. Kamat, and D. Agrawal, "A Framework for Handling Multicast Source Movement over Mobile IP," presented at ICC 2002.there is proposed a framework to support multicast over Mobile IP when the Mobile Node is a sender as well as a receiver for a multicast group. On one hand, a reverse tunnel from the current point of attachment of the Mobile Node to its HA is used to forward multicast packets. On the other hand, the remote subscription is used to receive multicast traffic. When a multicast source moves to a foreign network (which is not presently a member of the multicast group subscribed by itself), it sends a multicast join message in its foreign domain and a notify message to its HA. In this manner, a bi-directional tunnel is created between HA and FA while the multicast tree join is initiated. The bi-directional tunnel is temporary and it is kept until the multicast agent at the foreign domain starts receiving packets from its tree-joining request. Once the FA starts receiving packets from its new branch, it compares the packets sequence number with those received through the bi-directional tunnel. If there is some missing packet, it waits until the packet is forwarded from the HA. Afterwards, it requests the ending of the tunnel from the HA to the FA and keeps only the reverse tunnel. This approach does not cause multicast tree reconstruction but the routing path is still not the optimal SPT from the source to all the receivers. Moreover, this scheme does not totally avoid packet losses and the interruption of the flow during the process of handover.

To solve the source mobility issues, I. Romdhani, H. Bettahar, and A. Bouabdallah, "Transparent Handover for MobileMulticast Sources," presented at lnt. Conf. on Networking, Int. Conf. on Systems and Int. Conf. on Mobile Communications and Learning Technologies (ICNICONSMCL'06), 2006, introduces a new entity called *Mobility-aware Rendezvous Point* (MRP) as a meeting point where the receivers meet mobile sources. The MRP builds a cache that is used to map the permanent HoA of the mobile source with its temporary CoA. Based in this information a new Multicast Forwarding Table (MFT) format is proposed, in which each multicast source will be referenced by the two addresses (HoA and CoA) instead of a unique IP address In this approach the mobile source registers only once with the MRP by sending a Source Registration (SR) message. Afterwards, the multicast source encapsulates its multicast packets, and sends them to the MRP. The MRP decapsulates these packets and sends them to the multicast receivers using the (HoA,G) header. If the source moves to a new domain, it has to register again with the local MRP in that domain. The new MRP notifies remote MRPs about the source address change. Afterwards, it is responsible to encapsulate the multicast packets, and to send them to the remote MRPs. This way, the mobility of a multicast source is hidden from the mobile receivers. Nevertheless, this proposal does not totally avoid packet losses and the interruption of the flow during the process of handover.

As previously described, existing solutions do not solve the seamless sender mobility problem, since they do not totally avoid packet losses and the interruption of the flow during the process of handover. Moreover, several proposals introduce important amounts of signaling overhead and complexity in the communication system.

It is therefore an object of the invention to provide seamless mobility of senders.

### SUMMARY OF THE INVENTION

According to one embodiment there is provided a method for performing a seamless handover of a mobile node from which a multicast session originates, said method comprising:
sending said multicast session from said source via a unicast link to a node acting as a virtual multicast root by acting towards the receivers of said multicast session acts the source of said multicast session;
buffering data received from said source by said virtual multicast root;
continuing to send the buffered data by said virtual multicast root during a handover.

The virtual multicast root and its buffer can avoid the necessity of building a new multicast tree because the multicast source seems to have not changed, at least from the viewpoint of the receivers of the session.

According to one embodiment the method further comprises:
during a handover, storing the packets produced by the multicast application by a buffer module of said mobile node;
forwarding said session to said virtual multicast root from said buffer module.

The storing of the packets of the session by a buffer in the mobile node avoids the loss of packets during the actual handover.

According to one embodiment each domain has a virtual multicast root; and each Access Router has a database with the IP address of the virtual multicast root of the domain and the virtual multicast roots of its geographically neighbouring Access Routers.

According to one embodiment during handover the packets produced by the application generating said multicast session are stored in a buffer of said mobile node while the buffer in said virtual multicast root continues to deliver packets to the multicast tree.

In this manner the seamless continuation of the session becomes possible.

According to one embodiment the method further comprises:
sending by the mobile node after the handover a message to notify the said virtual multicast root that the Mobile Node address associated with the session has changed, and
pushing the packets contained in the buffer of said mobile node towards the buffer located in said virtual multicast root.

According to one embodiment the method further comprises:
connecting by said mobile node to a new virtual multicast root from which said multicast session is forwarded to the multicast tree, whereas said method further comprises:
   sending a message containing the new multicast address which includes the new address of the virtual multicast root towards the previous virtual multicast root to notify the receivers of said multicast session about the relocation of the multicast tree;
   joining the new multicast group by said receivers.

According to one embodiment the method further comprises:
sending by said mobile node a message towards the new virtual multicast root to instruct the allocation of a buffer to the session and to notify the new virtual multicast root that it is the new source for the multicast group; and
sending the packets stored in the buffer of said mobile node to the new virtual multicast root buffer.

According to one embodiment the method further comprises:
sending a message from said previous virtual multicast root to the one or more receivers of said session to inform them about the buffer of said previous virtual multicast root having become empty,
sending a join message from a receiver to said new virtual multicast root to indicate that the receiver wants to receive said session from said new virtual multicast root, and
upon receiving said join message, forwarding said the packets of said session from said new multicast root via said relocated multicast tree.

According to one embodiment there is provided an apparatus for performing a seamless handover of a mobile node from which a multicast session originates, said apparatus comprising:
a module for sending said multicast session from said source via a unicast link to a node acting as a virtual multicast root by acting towards the receivers of said multicast session acts as the source of said multicast session;
a module for buffering data received from said source by said virtual multicast root;
a module for continuing to send the buffered data by said virtual multicast root during a handover.

According to one embodiment the apparatus further comprises:
a buffer of said mobile node for storing the packets produced by the multicast application during a handover;
said buffer module being adapted for forwarding said session to said virtual multicast root from said buffer module.

According to one embodiment each domain has a virtual multicast root; and each Access Router has a database with the IP address of the virtual multicast root of the domain and the virtual multicast roots of its geographically neighbouring Access Routers.

According to one embodiment during handover the packets produced by the application generating said multicast session are stored in a buffer of said mobile node while the buffer in said virtual multicast root continues to deliver packets to the multicast tree.

According to one embodiment the apparatus further comprises:
a module for sending by the mobile node a message to notify the said virtual multicast root that the mobile node address associated with the session has changed,and
a module for pushing the packets contained in the buffer of said mobile node towards the buffer located in said virtual multicast root.

According to one embodiment the apparatus further comprises:
a module for connecting by said mobile node to a new virtual multicast root from which said multicast session is forwarded to the multicast tree, whereas said apparatus further comprises:
   a module for sending a message containing the new multicast address which includes the new address of the virtual multicast root towards the previous virtual multicast root to notify the receivers of said multicast session about the relocation of the multicast tree;
   a module for joining the new multicast group by the receivers of said multicast session.

According to one embodiment the apparatus further comprises:
a module for sending by said mobile node a message towards the new virtual multicast root to instruct the allocation of a buffer to the session, and to notify the new virtual multicast root that it is the new source for the multicast group; and
a module for sending the packets stored in the buffer of said mobile node to the new virtual multicast root buffer.

According to one embodiment the apparatus further comprises:
a module for sending a message from said previous virtual multicast root to the one or more receivers of said session to inform them about the buffer of said previous virtual multicast root having become empty;
a module for sending a join message from a receiver to said new virtual multicast root to indicate that the receiver wants to receive said session from said new virtual multicast root, and
a module for upon receiving said join message, forwarding the packets of said session from said new multicast root via said relocated multicast tree.

According to one embodiment there is provided a computer program which when being executed on a computer enables said computer to carry out a method according to an embodiment of the invention.

### DESCRIPTION OF THE DRAWINGS

Fig. 1 schematically illustrates a handover according to the prior art.
Fig. 2 schematically illustrates an situation in which a handover according to an embodiment of the invention is be performed.
Fig. 3 schematically illustrates a further situation in which a handover according to an embodiment of the invention is performed.
Fig. 4 schematically illustrates a further situation in which a handover according to an embodiment of the invention is performed.
Fig. 5 schematically illustrates a dynamic buffer change when a handover according to an embodiment of the invention is performed.
Fig. 6 schematically illustrates a situation in which a handover according to a further embodiment of the invention is performed.
Fig. 7 schematically illustrates a further situation in which a handover according to a further embodiment of the invention is performed.
Fig. 8 schematically illustrates a dynamic buffer change when a handover according to a further embodiment of the invention is performed.
Fig. 9 schematically illustrates an situation in which a handover according to a further embodiment of the invention is be performed.
Fig. 10 schematically illustrates a further situation in which a handover according to a further embodiment of the invention is be performed.
Fig. 11 schematically illustrates a further situation in which a handover according to a further embodiment of the invention is be performed.
Fig. 12 schematically illustrates a situation in which a handover according to a further embodiment of the invention is be performed.
Fig. 13 schematically illustrates a further situation in which a handover according to a further embodiment of the invention is be performed.
Fig. 14 schematically illustrates a further situation in which a handover according to a further embodiment of the invention is be performed.
Fig. 15 schematically illustrates a further situation in which a handover according to a further embodiment of the invention is be performed.

### DETAILED DESCRIPTION

In the following embodiments of the invention will be described.

The mechanism according to different embodiments will hereinafter also be referred to as SEMSE (Seamless Mobility of Senders for Media Distribution Services) and provides seamless mobility to senders of multi-user services when they move between different Access Routers. The seamless movement according to one embodiment is supported by buffering mechanisms that are responsible to assist the movement of senders between different Access Routers without packet losses. This is achieved through the combination of buffers in the Mobile Nodes (referred to as Holders) and in the Access Network (referred to as VMRs), which together avoid packet losses during handover. Each Access Network will contain at least one VMR which is composed by a cluster of buffers (each buffer being dedicated to a single session). Hereinafter, a single session will be used for illustration purposes, and consequently, the respective VMR will be composed of a single buffer.

The multicast session is sent from the Mobile Node to the VMR via a tunnel, where it is stored and sent to the multicast tree. From the viewpoint of the receivers, the multicast source is the VMR, and consequently, the source movement will be concealed from them. In other words, the multicast tree will be defined by *<VMR, G*>. During the handover, and despite the loss of connection with the Mobile Node, the VMR continues to send the buffered packets avoiding the interruption of the session flow. This capability depends on the amount of packets buffered by the VMR, on the transmission rate and on the handover duration. Moreover, the VMR avoids the reconstruction of the tree each time the Mobile Node executes a handover. The role of the Holder is to store the packets produced by the sender application during the handover, in order that after handover, its interaction with the VMR will constrain/eliminate packet losses. When the distance from the Mobile Node to the VMR becomes excessive, it is advantageous that the Mobile Node joins a new VMR.

According to one embodiment the SEMSE mechanism is supported by the following messages:
- *UpdateMNLocation:* message sent from the Mobile Node to notify a VMR about the new address of the Mobile Node;
- *UpdateMNLocationReply:* acknowledge message sent from VMR to the Mobile Node;
- *UpdateVMRLocation:* message sent by the Mobile Node towards the previous VMR to redirect the receivers to the new multicast tree (associated with the new VMR).
- *HandoverBearer:* after the handover decision, this message is sent by the current Access Router to the Mobile Node, providing information related to the future Access Router and VMR;
- *LeaveVMR:* message sent by the VMR towards the receivers that instructs them to leave the respective multicast tree.

According to one embodiment the SEMSE mechanism described above contains the following interfaces and components in order to provide seamless mobility of the Mobile Node:
- Interfaces
   - Interaction with session control mechanisms: when the handover decision is taken, the interaction with session control mechanisms allows for the transfer of the session to the new Access Router and for the release of resources on the old path;
- Components
   - Holder: composed by a buffer or a buffer module that is used to store packets produced by the multicast application during handover.
   - VMR: the packets are buffered in the VMR before they are delivered to the multicast tree. The VMR will continue to feed the multicast tree during handover in order to avoid interruptions in the flow;

The mechanism results in the following advantages compared with the prior art:
- Performs media transmission during handover of sender;
- Avoids or significantly reduces packet loss during handover of sender;
- Can be used for micro-mobility or macro-mobility movement of the sender;
- Receivers do not see any interruption of the flow during the handover;
- The multicast sender can operate in Unicast and Multicast domains;
- Allows network operators to increase the level of satisfaction of users by providing an almost continuous flow of media to the receivers.
- introduces only low communication overhead;
- It has low complexity

Further embodiments of the invention will now be described in the following.

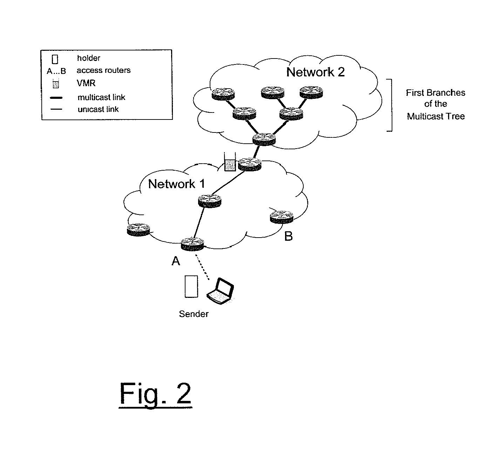

As illustrated in Fig. 2, the multicast source (a mobile node) which produces the session sends the packets of the session towards the VMR (e.g. via a tunnel or through any unicast link) where they are stored in the buffer of the VMR. From there they are delivered to the multicast tree. This way, the Mobile Node can send multicast packets even when it is connected to a non-multicast domain. There is (at least) a VMR per domain and it is assumed that each Access Router has a database with the IP address of the VMR of the domain and the VMRs of its geographically neighbouring Access Routers. This database can be created manually (based on a previous roaming agreement) or by performing periodic message exchanges between the geographically neighbouring Access Routers as is also seen in FMIP.

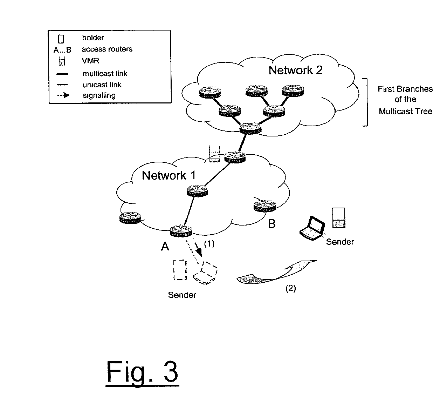

Now the handover procedure according to one embodiment will be explained in somewhat more detail in connection with Fig. 3. When the handover decision is taken, a *HandoverBearer* message is sent to the Mobile Node (step 1 in Fig. 3) with information concerning the VMR in the domain of the new Access Router or the VMR associated to the new access router. According to one embodiment this is possible because each access router stores the IP address of the VMR to which itself is associated and the IP address of the VMR to which its neighbor access routers are associated. In the example of Fig. 3 the domain remains the same, access nodes A and B belong to the same domain (network 1) having the same associated VMR). If available the *HandoverBearer* message may further comprise information regarding the connectivity regarding the IP address of the new Access Router. During handover (indicated as step (2) in Fig. 3) the data produced by the application will be stored in the respective Holder and the VMR will continue to feed the multicast tree. The occupation of the Holder will increase until a level that depends on the duration of the handover and on the rate used by the sender application. On the other hand, the occupation of the buffer in the VMR will diminish and the capacity to nourish the multicast tree will depend on the amount of packets existent in the VMR before the handover, on the source rate and on the handover duration. In short, during handover the packets produced by the application are stored in the Holder while the buffer in the VMR continues to deliver packets to the multicast tree

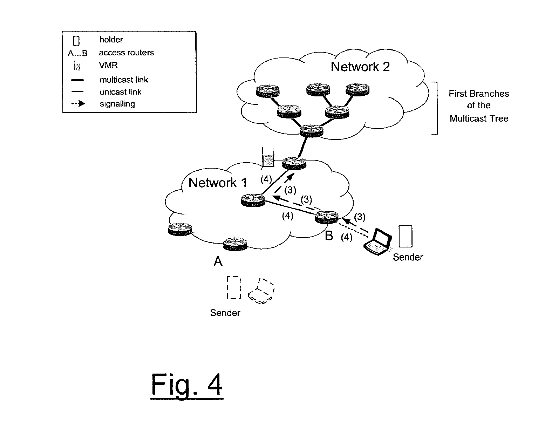

Now the procedure after a handover according to one embodiment will be described in connection with Fig. 4. After handover, the Mobile Node sends an *UpdateMNLocation* message (step 3 in Fig. 4) to notify the VMR that the Mobile Node address associated with the session has changed. Afterwards, it pushes the packets contained in the Holder towards the buffer located in the VMR. This way, the seamless mobility will depend on the amount of data available on the VMR to feed the multicast tree during handover and on the Holder size to store the packets produced by the application. In the following, the session continues to be delivered from the Mobile Node to the VMR (step 4 in Fig. 4). This way, the reconstruction of the multicast tree is avoided since the respective source address remains the same from the viewpoint of the receivers.

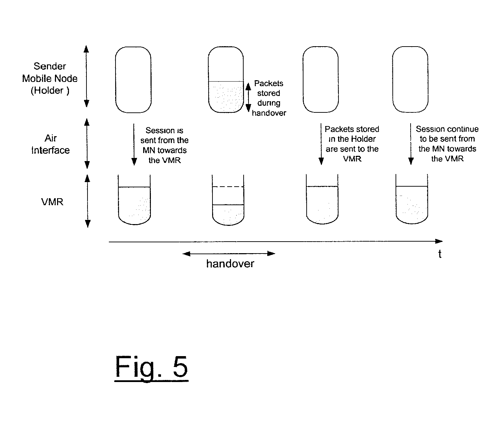

In the following the dynamics in the Holder (the buffer in the mobile node) and the VMR occupation according to one embodiment will be described in connection with Fig. 5.

The leftmost part of Fig. 5 shows the initial situation before a handover. Here the Holder (the buffer in the mobile node) is empty because the packets are directly forwarded to the VMR without the need for keeping them in the buffer. On the other hand, the buffer in the VMR is full to enable the session to be continued once the incoming datastream ceases due to the handover of the mobile node. This situation is shown in the second figure from the left which illustrates how during a handover the Holder is filled while the VMR buffer occupation gradually decreases as the session continues without interruption. Once the handover is completed the holder is emptied again and the VMR buffer is re-filled again as shown in the third figure from the left in Fig. 5. When the normal state is reached again (as illustrated by the rightmost figure in Fig. 5), the session continues by sending the packets from the mobile node to the VMR and from there to the multicast tree.

In the previous embodiment the VMR remains the same, and consequently, the multicast tree does not have to be reconstructed. However, when the Mobile Node gets too far from the VMR it needs to connect to a closer VMR. In this case, according to one embodiment the Mobile Node can send ICMP packets to the current VMR and take the decision to change when the Round Trip Time (RTT) is superior to a threshold. When this situation occurs some steps will occur that are similar to the ones previously described. Namely, during the handover the Holder continues to store the packets produced by the application.

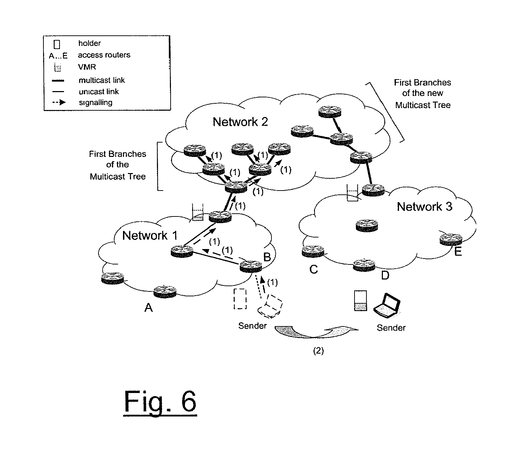

However, the Mobile Node movement in this case leads to the change of the VMR, and consequently, to a new multicast group. Therefore, in this situation the Mobile Node has to notify the receivers about the relocation of the multicast tree. For this reason, the message *Update VMRLocation* is sent towards the previous VMR, where it is forwarded into the multicast tree (step 1 in Fig. 6). This message contains the new multicast address *<newVMR, G*>, where *newVMR* denotes the address of the new VMR. After the reception of this message, the receivers immediately join the new multicast group.

Step (2) illustrated in Fig. 6 is the handover itself where the mobile node moves from access point B to access point D.

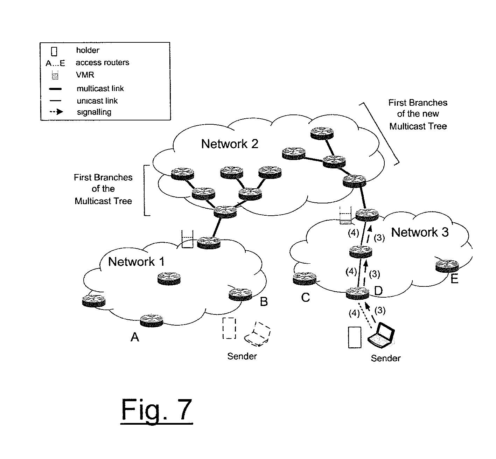

In order to avoid the loss of packets the receivers continue to accept the packets from the previous VMR despite having been informed about the new multicast group. After handover, the Mobile Node sends an *UpdateMNLocation* message towards the new VMR to instruct the allocation of a buffer to the session, and consequently, to notify the new VMR that is the new source for the multicast group (step 3 in Fig. 7). Following, the packets stored in the Holder are sent to the new VMR buffer, and the session starts to flow to it (step 4 in Fig. 7).

When the new VMR receives the first join from the receivers, it starts to deliver the session to the new multicast tree. Meanwhile, when the buffer in the previous VMR becomes empty, the VMR sends a *LeaveVMR* message towards the receivers. After the reception of this message the receivers can leave the previous multicast tree.

According to one embodiment the receivers join the new multicast tree even before the *LeaveVMR* message has been sent, so that they are ready to start receiving packets send though this tree. However, typically the sender is still in handover and only after some time the sender will feed the new multicast trees via the new VMR. In the meantime the receivers still get packets stored in the old VMR.

If the sender handover is very fast, the receivers may start receiving packets via the new multicast tree while they are still receiving packets from the old VMR. However, this is not a problem, since the receivers will then order the packets before sending them to the application.

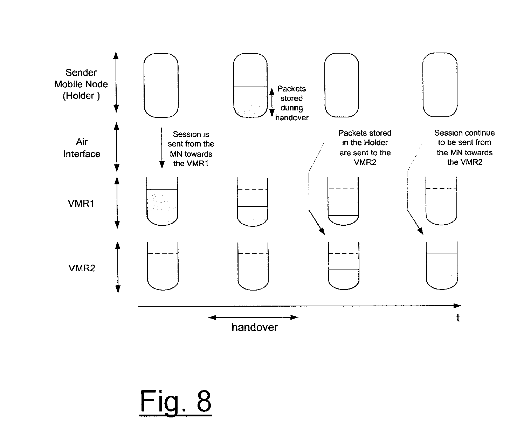

The dynamics involving the occupation of the Holder and the VMR according to one embodiment will now be described in connection with Fig. 8.

Initially the packets of the session are transmitted to the buffer of the first VMR (VMR1) as shown in the leftmost figure of Fig. 8. Then the handover takes place and the buffer of the VMR1 gradually becomes empty as the packets stored therein are forwarded to the multicast tree to maintain the session without a packet loss. The new VMR (VMR2) is informed about its becoming the new VMR, e.g. by sending to it the *UpdateMNLocation message* mentioned before. This instructs VMR2 to install a buffer for the session. This state is illustrated by the second figure from the left in Fig. 8.

Once the buffer in VMR2 has been installed it may receive packets from the mobile node. This is illustrated in the third figure from the left in Fig. 8 which illustrates that the Holder is emptied by forwarding the packets stored therein to the VMR2 which leads to the buffer of VMR2 being gradually filled as the Holder becomes emptied. In this state the session is still maintained by forwarding from the old VMR (VMR1) the packets stored in its buffer, in other words the receiver (or receivers) of the session continue to receive the session from the VMR1, despite they may have already been informed about the new multicast group address from the mobile node.

However, once the buffer of the previous VMR (VMR1) becomes empty, the receivers may then receive the next packets of the session from the new VMR (VMR2): For that purpose they may be informed by the VMR1 about the fact that its buffer has become empty, e.g. by the already mentioned *LeaveVMR* message which is sent from the VMR1 to the receiver(s) of the session.

This may trigger the receivers to receive the session now from VMR2, and they may do so by sending a "join" message to the new VMR (VMR2) to inform it about their desire to join. In response to the first one of such a "join" message the new VMR (VMR2) may start to forward the packets of the session to the receiver(s) via the new multicast tree. This is schematically illustrated by the rightmost figure in Fig. 8. Then the session continues from the new VMR (VMR2).

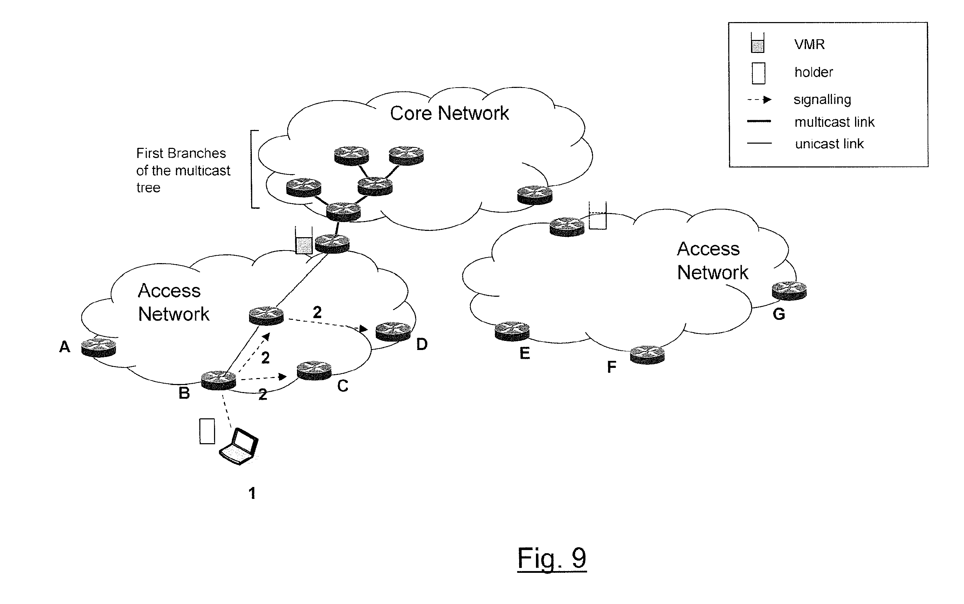

In the following a further embodiment will be described which does not involve a new VMR. Fig. 9 illustrates the initial situation where there are two access networks and one core network in which the multicast tree is located. In the access network the session is forwarded via an unicast link to the virtual multicast root VMR which acts as a "pseudo-multicast source" for a session originating form VMR. The multicast session is distributed via a multicast tree with the pseudo-source located at VMR, <VMR, G>. If other sources exist in the Access Network, they will have a mapping such as:
- Source1: <VMR,G1> <VMR,G2>;
- Source2: <VMR,G3> <VMR,G4>, <VMR,G5>

The mapping is made since because all multicast trees are sourced at the VMR, there may be some doubts about how to distinguish multicast trees from different sources (located in the same access network and so using the same VMR). The problem is that without the VMR the sessions of different senders are clearly distinguished by the source IP address in the multicast channel <S, Gx>. But with VMR as pseudo-source of all multicast traffic sourced in the same access network, one looses this distinction based on the source IP address.

Therefore according to one embodiment the VMR stores the association between the sessions of each sender and the multicast trees rooted at itself. For instance, if there are two sources S1 and S2 in the same access network and each source is sending a multicast session with two flows there are the data inside the access network <S1, VMR, port1>, <S1, VMR port2>, <S2, VMR, port1>, <S2, VMR,port2>. This is, there are four unicast flows with source in S1 or S2, and destination VMR. For the same source, flows are distinguished by the communication port. However these "channels" are never seen by the receivers. What the receivers see are the following four channels, for instance:
<VMR, G1>, <VMR, G2>, <VMR, G3>, <VMR, G4>.

Therefore according to one embodiment the VMR stores the correspondence between them: session1 of source1 corresponds to <VMR, G1>, <VMR, G2> and session1 of source2 corresponds to <VMR, G3>, <VMR, G4>

As a handover becomes necessary, in step 2 there is made a handover prediction to candidates C and D, and connectivity information regarding connectivity of the MN in the new access router is collected in a third step (not illustrated in Fig. 9.

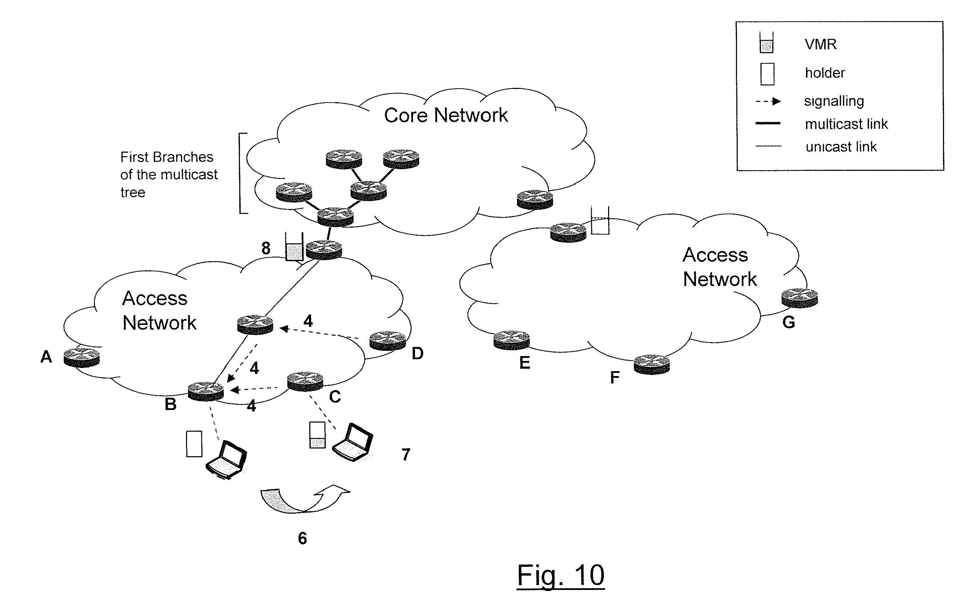

As illustrated in Fig. 10, based on the S/N ratio and the response (4) from the predicted access routers there is then made a handover decision (step 5, not illustrated in Fig. 10).

The handover is then performed as step 6, and during the handover the buffer of the mobile node (the Holder) is filled (illustrated as step 7) while the buffer of the VMR is emptied (illustrated as step 8).

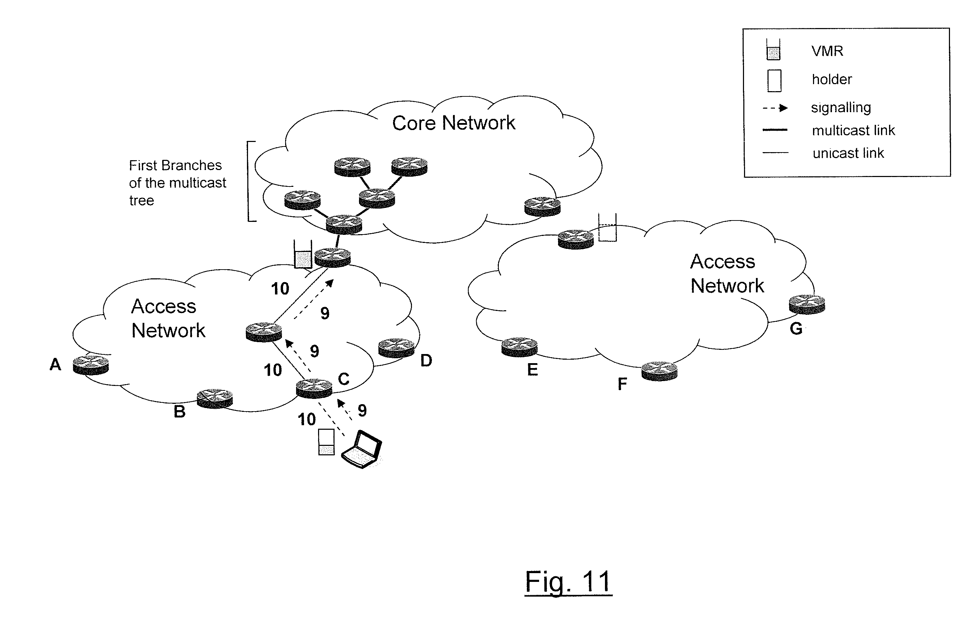

As shown in Fig. 11 as step 9, then some signaling is sent towards the VMR to update the new address of the MN that is sending the session. As step 10 then the source sends the packets saved in the holder to the VMR, and continues to send the session.

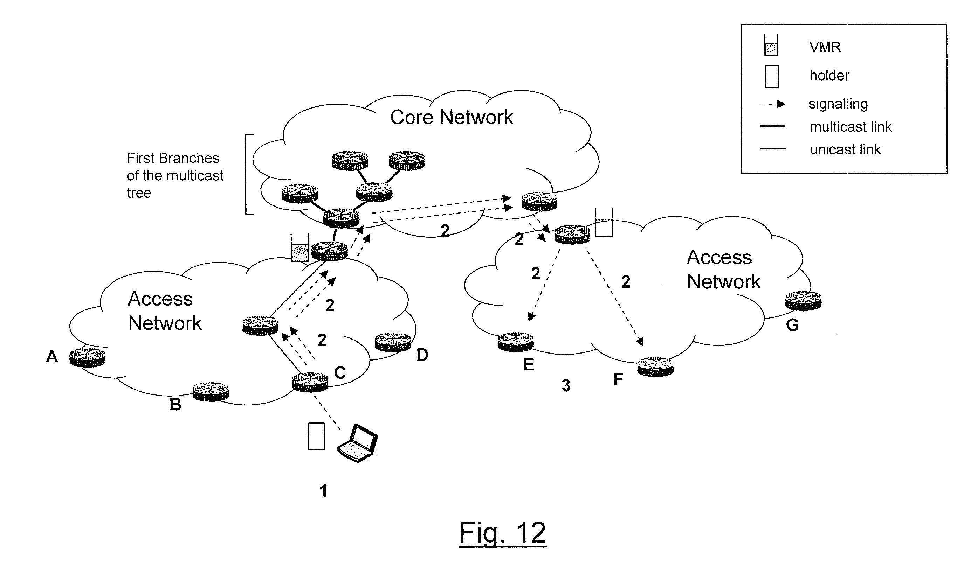

Now a further embodiment which involves a new VMR will be explained. After the initial state shown as step 1 in Fig. 12, as a second step a handover prediction to candidates E and F is made. Then, as a third step, information regarding the connectivity of the MN in the new access router is collected.

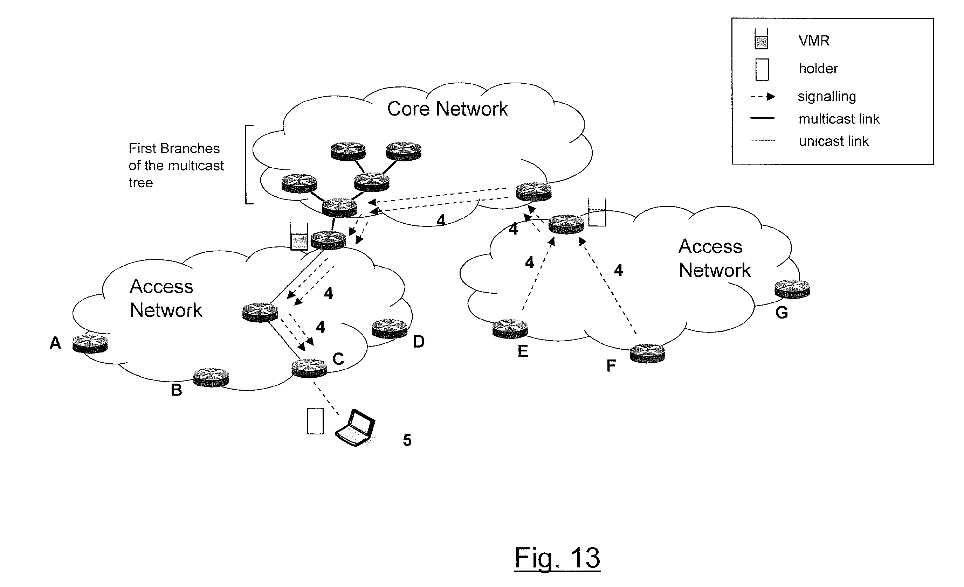

As shown in Fig. 13, as a fourth step there is a response form the predicted access routers and based thereupon as a fifth step a handover decision is made, e.g. in the mobile node.

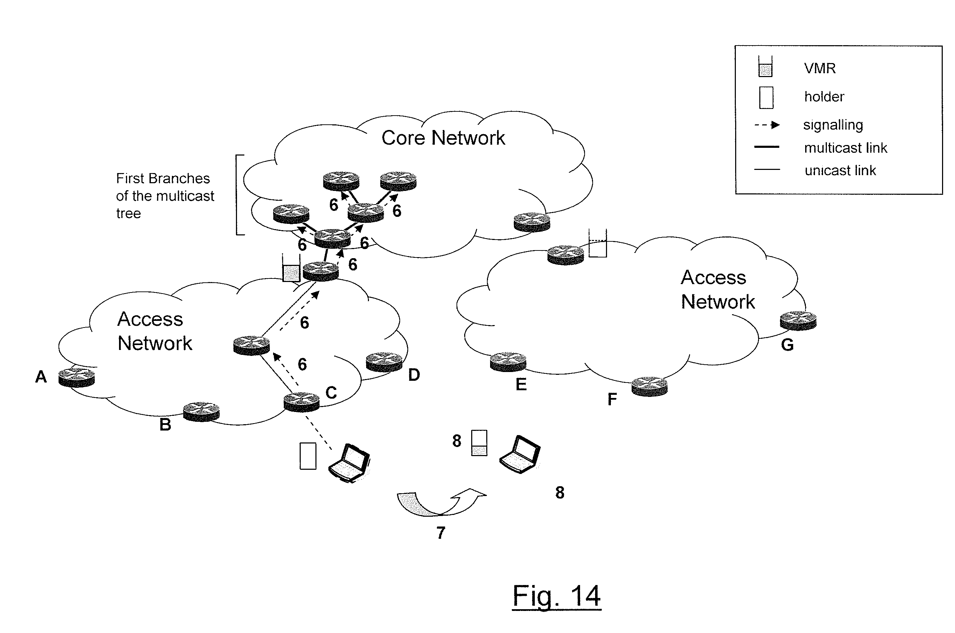

As illustrated in Fig. 14, as a sixth step the message *UpdateVMRLocation* is sent towards the VMR, from where it is delivered to the multicast tree. Then the handover is performed as seventh step. During the handover the holder stores the packets of the session, and after handover as an eighth step the holder contains the packets that were produced by the application during the handover.

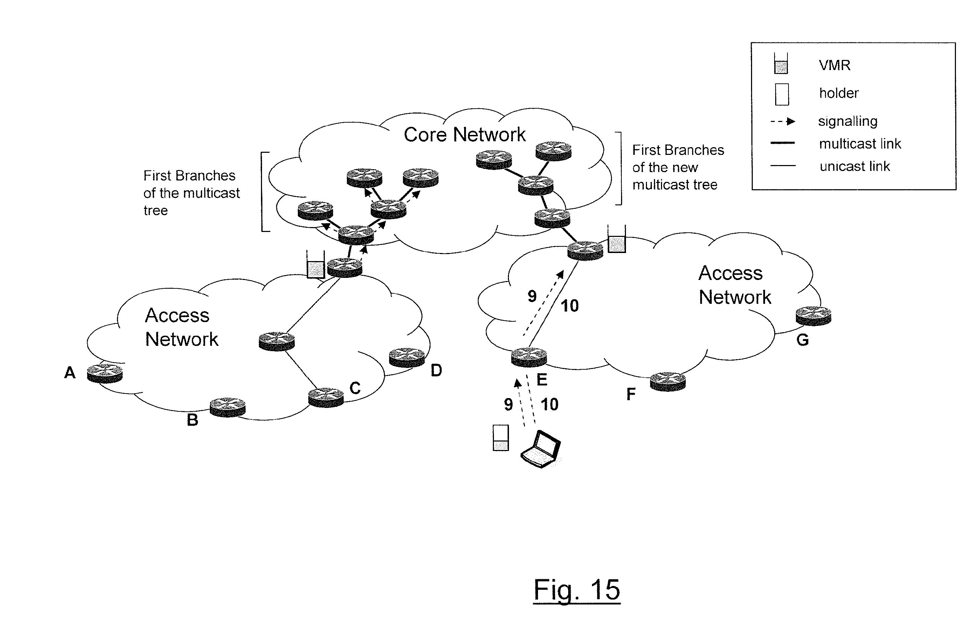

As illustrated in Fig. 15, as a ninth step some signaling is sent towards the new VMR to bind the session with the new address of the MN. As a tenth step, the source sends the packets saved in the holder to the VMR, and continues to send the session.

At the same time, the packets in the buffer of the previous VMR are consumed by sending them to the receivers which continue to receive the session from the previous VMR until its buffer has become empty. The previous VMR then sends a *LeaveVMR* message towards the receivers which then in response - and after having received the *updateVMRmessage* which has informed the receivers about the new multicast tree - join the new multicast tree <newVMR, G>.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a node or element in a network which is suitably programmed such that it is able to carry out a seamless handover as described in the embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

Embodiments of the invention may be implemented e.g. by nodes in a network or any entities in a network which are programmed to operate in accordance with the seamless handover mechanisms as described before.

## Claims

1. A method for performing a seamless handover of a mobile node from which a multicast session originates, said method comprising:
sending said multicast session from said source via a unicast link to a node acting as a virtual multicast root by acting towards the receivers of said multicast session acts the source of said multicast session;
buffering data received from said source by said virtual multicast root;
continuing to send the buffered data by said virtual multicast root during a handover.

2. The method of claim 1, further comprising:
during a handover, storing the packets produced by the multicast application by a buffer module of said mobile node;
forwarding said session to said virtual multicast root from said buffer module.

3. The method of one of the preceding claims, wherein each domain has a virtual multicast root; and
each Access Router has a database with the IP address of the virtual multicast root of the domain and the virtual multicast roots of its geographically neighbouring Access Routers.

4. The method of one of the preceding claims, wherein
during handover the packets produced by the application generating said multicast session are stored in a buffer of said mobile node while the buffer in said virtual multicast root continues to deliver packets to the multicast tree

5. The method of one of the preceding claims, further comprising:
sending by the Mobile Node after the handover a message to notify the said virtual multicast root that the Mobile Node address associated with the session has changed, and
pushing the packets contained in the buffer of said mobile node towards the buffer located in said virtual multicast root.

6. The method of one of the preceding claims, further comprising:
connecting by said mobile node to a new virtual multicast root from which said multicast session is forwarded to the multicast tree, whereas said method further comprises:
sending a message containing the new multicast address which includes the new address of the virtual multicast root towards the previous virtual multicast root to notify the receivers of said multicast session about the relocation of the multicast tree;
joining the new multicast group by said receivers.

7. The method of one of the preceding claims, further comprising:
sending by said mobile node a message towards the new virtual multicast root to instruct the allocation of a buffer to the session, and to notify the new virtual multicast root that it is the new source for the multicast group; and
sending the packets stored in the buffer of said mobile node to the new virtual multicast root buffer.

8. The method of one of claims 6 or 7, further comprising:
sending a message from said previous virtual multicast root to the one or more receivers of said session to inform them about the buffer of said previous virtual multicast root having become empty,
sending a join message from a receiver to said new virtual multicast root to indicate that the receiver wants to receive said session from said new virtual multicast root, and
upon receiving said join message, forwarding the packets of said session from said new multicast root via said relocated multicast tree.

9. An apparatus for performing a seamless handover of a mobile node from which a multicast session originates, said apparatus comprising:
a module for sending said multicast session from said source via a unicast link to a node acting as a virtual multicast root by acting towards the receivers of said multicast session as the source of said multicast session;
a module for buffering data received from said source by said virtual multicast root;
a module for continuing to send the buffered data by said virtual multicast root during a handover.

10. The apparatus of claim 9, further comprising:
means fo carrying out a method according to one of claims 1 to 8.

11. A computer program comprising computer program code which when being executed on a computer enables said computer to carry out a method according to one of claims 1 to 8.
